# EUROPÄISCHE PATENTSCHRIFT

(11) **EP 1 691 306 B1**
(45) Veröffentlichungstag und Bekanntmachung des Hinweises auf die Patenterteilung: **11.04.2007**
(21) Anmeldenummer: 05002890.1
(22) Anmeldetag: 11.02.2005
(51) Int. Cl.: G06F 17/30, G06F 9/46, H04L 29/08, H04L 29/06

(54) **Client mit Speicher zum selbstständigen Ablaufen einer Applikation unabhängig vom Server**
Client with memory for autonomously executing an application independent from a server
Client avec mémoire pour l'execution autonome d'une application indépendemment du serveur

(43) Veröffentlichungstag der Anmeldung: 16.08.2006
(73) Patentinhaber: 12snap AG, 80636 München (DE)
(72) Erfinder: Winter, Moritz, 80333 München (DE)
(74) Vertreter: Niederkofler, Oswald

(56) Entgegenhaltungen:
- EP-A- 1 304 616
- US-A1- 2004 192 282
- US-A1- 2004 210 433

## Beschreibung

### GEBIET DER ERFINDUNG

Die vorliegende Erfindung betrifft allgemein einen Client in einem Client-Server-Netz sowie ein Verfahren zum Betreiben des Client und/oder Server.

### HINTERGRUND DER ERFINDUNG

Gegenwärtig werden bei einem gängigen Kundenbindungsprogramm, typischerweise ein Umsatzsammelprogramm, meistens papierhafte Medien, wie z.B. Briefe als Kontoauszüge eingesetzt.

Darüberhinaus finden beispielsweise Pakete mit Präsenten, Gutscheine oder Rabattmarken, Kundenkarten und Klebepunkte Verwendung. Dies geschieht inzwischen jedoch als elektronische Variante durch Plastikkarten, e-Mails und User-zugangsgeschützte Websites. Danach werden unter einem Kundenbindungsprogramm beispielsweise datentechnische Dienstleistungen in der Form verstanden, dass das Kundenbindungsprogramm mit Hilfe einer multimedialen Applikation umgesetzt wird.

Jedoch setzen erst einige wenige Unternehmen für die Übertragung von derartigen Kundenbindungsprogrammen ein Telekommunikationssystem ein, beispielsweise als Medium ein bewegbares Datenendgerät.

Ein Beispiel ist ein derzeit auf dem Markt befindliches Verfahren, das Kundenbindungsprogramm "VodafoneStars" der Vodafone GmbH, welches durch Teams der Anmelderin realisiert und verwaltet wird. Dieses basiert zum einen durch Verwendung mobiler Kommunikationstechnologie als Informations/Kommunikationsmedium, zum anderen in Form digitaler Prämien, wie z.B. downloadbare Spiele oder Programme. Unter einer Prämie bzw. Prämienleistung werden gewährte Dienstleistungen in Form einer Telekommunikation bzw. Telekommunikationsdienste verstanden. Dabei wird also nicht mehr ein Brief mit einem Kontoauszug verschickt, sondern eine elektronische Nachricht. Weiter werden dabei keine Papierbons oder Accessories (Zubehör) mit Marken-Logo, sondern digitale Prämien wie mobile Coupons oder Spiele ausgegeben. Weiter kommen dabei als mobile Applikationen bzw. Anwendungen beispielsweise Dienstleistungen oder Vertrieb mit mobilen Inhalten in Frage. Unter mobilen Inhalten werden zunächst allgemein sog. Content-Daten verstanden, d.h. insbesondere Musik-Daten, Video-Daten, Multimedia-Daten, Text-Daten, Meßwerte, Anwendungsprogramme, insbesondere Spiele, Navigationsdaten oder andere Software.

Als typisches Datenendgerät bzw. Datenendgeräteeinrichtung auf denen eine Applikation, d.h. ein Anwendungsprogramm, der vorgenannten Art läuft, kommen beispielsweise ein zelluläres bzw. Funktelefon oder Smart-Telefon, ein tragbarer Computer, oder ein PDA (persönlicher digitaler Assistent) mit einem Funkmodul als Mobilfunkgerät in Betracht.

Daneben kann es sich bei den betrachteten Datenendgeräteeinrichtungen rein prinzipiell um jedes elektronische Gerät mit in Frage kommendem Formfaktor handeln, das beweglich ist oder beweglich gemacht werden kann und eine dafür geeignete Schnittstelle zu einem Mobilfunknetzwerk, beispielsweise einem GSM-, UMTS- oder CDMA-Netzwerk oder verwandte bzw. auf das Endgerät angepasste Technologien besitzt und mit in einer entsprechenden Weise angesprochen werden kann.

Die Datenendgeräteeinrichtungen befinden sich in einem zellulären Kommunikationsdienstgebiet, das von einer oder einer Mehrzahl einer Basisstation abgedeckt wird und in dem die Voraussetzung für einen Übertragungsbetrieb mit entsprechenden Datenübertragungsvorrichtungen gegeben sind.

Das Problem bei einer mobilen Anwendung mit mobile Inhalten entsteht nun im Wesentlichen dabei, einem komplexen nachstehend etwas genauer betrachteten Anforderungsprofil gerecht zu werden, bei dem gegenläufige Forderungen auftreten können, die sich wiederum einander bedingen können.

Zunächst ist bei den vorgenannten Applikationen von drahtlosen Anwendungen zu sprechen, die für Anwendungen in vorgenannten mobilen Geräten Verwendung finden.

Bei derartigen mobilen Anwendungen liegen mithin Umgebungen vor mit begrenzten Resourcen hinsichtlich Netzwerkfähigkeiten, Anzeige, Speicher, Prozessor, speicherbar verfügbarer Energie iVm erreichbarer Betriebsdauer und Eingabe/Ausgabeanschlüssen.

Weiter ist allerdings, obwohl es bei drahtlosen Anwendungen auf den ersten Blick Ähnlichkeiten hinsichtlich der vorgenannten Technologien geben könnte, der Verwendungskontext von drahtlosen Anwendungen gegenüber dem von Fest-Netz-Internet-Anwendungen sehr unterschiedlich. Auch handelt es sich nicht um verkleinerte oder "abgespeckte" Versionen von Festnetzanwendungen, weil nämlich der Benutzungskontext ein ganz anderer ist. So müssen die mobilen Benutzer vergleichsweise mit sehr begrenzten Ein-/Ausgabe-Fähigkeiten auskommen, beispielsweise ein kleiner alphanumerischer Eingabeblock oder eine kleine Anzeigevorrichtung, die sich aufgrund der äußeren Abmessungen der Geräte ergeben.

Daneben sind die verfügbaren Netzwerkverbindungen nicht nur wesentlich langsamer, sei es hinsichtlich atmosphärischer Einflüsse auf Übertragungskanäle und Ausbreitungsphänomenen bishin zu Aspekten der Kanalauslastung, sondern sie sind auch teurer.

Zunächst ist einerseits soweit auch anzunehmen, dass drahtgebundene oder drahtlose Schnittstellen auf der Basis fortschreitender Wellen, sei es wegen der verwendeten Frequenzbandbreite, dem verwendeten Übertragungsverfahren, dem dabei erreichbaren Signal-Rausch-Abstand, oder dem durch einer große Anzahl an Teilnehmern zunehmendem Rauschen, nicht unbegrenzt ausbaufähig sind.

Andererseits erscheint die Annahme gerechtfertigt, dass im Wege der voraussichtlichen technologischen Fortentwicklung in Ansehung der erforderlichen Investitionskosten die Anzahl der Nutzer und der Anwendungsfälle auf vorhandenen Schnittstellen überproportional zu den verfügbaren Kanälen ansteigen, zumal die verwendeten Verfahren vielfache Kanalauslastung vorsehen.

Mithin werden vorhandene Resourcen wie Übertragungskanäle jedenfalls strapaziert, was auf Kosten der Dienst- bzw. Übertragungsqualität gehen kann.

Allerdings enthält das vorbeschriebene Anforderungsprofil insbesondere die Forderung nach speichersparender Ausführung beispielsweise hinsichtlich Endgeräte-Speicher und Rechenleistung und Energieverbrauch.

In diesem Zusammenhang stellt sich die Frage, wie sinnvoll es ist, dass Client-basierte Anwendungen oder Anwendungen, die nur auf dem Server laufen, das Endgerät mehr oder weniger nur als Ein/Ausgabe-Vorrichtung verwenden. Hierbei liegt also ein Client-Server-Netzwerk vor, bei dem ein (1) Server zumindest mit einem (1) Client verbunden ist und ein Netz bildet, wobei zwischen diesen beiden Netzteilnehmern irgendeine Übertragungsstrecke zum gegenseitigen Informationsaustausch besteht.

Wiederum spielen die verfügbaren Datenraten und Kanäle in Verbindung mit der Beschaffenheit der zu übertragenden und zu authorisierenden Daten eine Rolle, beispielsweise Blockgröße oder Echtzeitanforderungen, als bei derartiger Übertragung zwischen Client und Server nachteilige Wartezeiten entstehen können.

Zusammenfassend ist hinsichtlich des aufgezeigten Anforderungsprofils demnach der Nutzer mobiler Anwendungen und mobiler Inhalte, wie sie die Anmelderin verfügbar machen kann, stark vereinfacht im wesentlichen zuerst ein geringer Übertragungsaufwand an sich, ein großes Maß an Unabhängigkeit, schnelle Verfügbarkeit der Inhalte, und hohe Nutzerakzeptanz gefordert, und zwar bei geringen Datenraten bzw. Datenaufkommen und vertretbaren Kosten.

Demnach ist die Datenverarbeitung der Daten auf einem zentralen Server soweit vielversprechend, als sich dort die entsprechenden Verwaltungsaufgaben zentral erledigen lassen.

Dabei ist allerdings eine Verbesserung der Benutzerführung durch die Bereitstellung von geeigneten Einrichtungen bzw. mobilen Applikationen wünschenswert, die über typische explizite Kundeneinstellung hinausgeht.

Bei herkömmlichen Systemen geschieht die Lieferung von Inhalten über einen Datenübertragungskanal an das Mobilfunkgerät mittels paketierter Daten. Dabei ist der übliche Übertragungskanal beispielsweise eine Luftschnittstelle, die auf dem GSM-OTA (global system mobile - over-the-air) Verfahren basiert. Das verwendete Mobilfunkgerät bietet auch weitere Schnittstellen zu anderen Geräten oder dem Internet, beispielsweise Universal Serial Bus, Firewire, Blue Tooth, Infrarot, HTTP, HTTPS, SSH, LAN oder MIDI (Musical Instruments Digital Interface).

Für mobile Anwendungen werden im Stand der Technik im wesentlichen zwei Ansätze auf der Basis der nachfolgenden Prinzipien angewendet.

Nach einem ersten Ansatz erfolgt die Anwendung Messagebasiert, d.h. per SMS-Kurznachricht. Diese werden über den sog. Signalling Channel regelmäßig mit bis zu 160 Zeichen übertragen. Nachteilig an der SMS-Kommunikation ist, dass sie asynchron ausgelegt ist. Daher bekommt der Konsument auf seinem Endgerät keine unmittelbare Rückmeldung zur Gültigkeit seiner Nachrichten. Daneben erhält er weder eine Bestätigung über den Zugang noch über den Zeitpunkt der Zustellung seiner Nachricht.

Nach einem zweiten Ansatz ist die Anwendung WAP-(Wireless Application Protocol) oder WEB-basiert. Dabei liegt ein Funktelefon mit WAP-Fähigkeiten vor, dass im Netzverbund mit einem Inhaltslieferanten (Content-Provider), einem Kurznachrichtendienstgerät (Short-Message-Server) und einer mobilen Schalteinrichtung, wie beispielsweise eine Basisstation eines Funknetzwerkes liegen kann. Hier besteht, soweit die Netzbedingungen zulassen, die Möglichkeit einer unmittelbaren Antwort. Jedoch ist die Kommunikation auf Umstände beschränkt, unter denen eine mobile IP-Verbindung möglich ist. Zudem fallen sofortige Kosten für die Kommunikation an.

Daneben sei als Beispiel noch die in der US 2003/02224810 A beschriebene Systemkonfiguration für einen WAP-Push einer SMS herangezogen. Ein sog. Push ist dabei eine Datenverschiebung von einem Server zum Client. In umgekehrter Richtung, also bei einer Datenverschiebeoperation von einem Client zu einem Server spricht man von einem sog. Pull. Die Datenverschiebung basiert dabei auf einer bidirektionalen Datenübertragung.

Für die vorgeschlagene WAP-Datenverschiebung wird unter Verwendung eines bidirektionalen Kommunikationsweges von der Verarbeitungseinheit des Funktelefons, mit Speicher-ProzessorSystem mit einer dafür vorgesehenen Programm-Applikation, eine Kurznachricht von dem sog. Push-Content-Server in das Endgerät übertragen. Dabei ist jedoch übertragungsmäßig ein zusätzliches Mittlerprogramm zwischengeschaltet, das gemäß der Einstellung des Endgerätes wie eine Art Multiplexer bzw. einfacher interner Router für ankommende Nachrichten nach eingestellten Verhaltensmodi wirken soll. Durch die zusätzliche Instanz wird einerseits der Verarbeitungsaufwand im Endgerät signifikant erhöht, andererseits funktioniert das gesamte System nur zuverlässig, wenn sich das Endgerät ständig im Netz befindet.

Neben dem reinen Inhalt ist auch Identifizierungs- und Verschlüsselungsaufwand erforderlich, der einen wesentlichen oder überwiegenden Anteil des Kommunikationsaufwandes bedingt. Dabei wird typisch ein verschlüsselter Datenschlüssel beispielsweise über einen Signalisierungskanal des Mobilfunknetzes, d.h. als SMS übertragen, während die Übertragung der verschlüsselten Daten selbst über einen GSM-Datenkanal erfolgt. Hieran kann einerseits der Nachteil einer ungleichmäßigen Kanalauslastung deutlich werden, andererseits können verfügbare Kanäle nicht ausgelastet werden.

Auch der typische Aufbau, mindestens als herkömmliche Client-Server-Konfiguration, oder als Dreiecksbeziehung aus einer Art Lizenzserver für die Verwaltung der contentbezogener Nutzungsrechte, beispielsweise einem Content-Provider und dem hier betrachteten Endgeräte-Client des Nutzers, sorgt schon für einen Kommunikationsaufwand bei dem wiederum dauerndes Vorhandensein des Client im Netz erfordert wird. Dabei ist ein derartiges System für den Benutzer abrechnungstechnisch relativ intransparent und kann Vertrauensproblemen beim Benutzer begegnen. Dies kann sogar dazu führen, dass der Benutzer eine Internetverwendung meidet und sein Endgerät weit überwiegend nur für Telefonie verwendet.

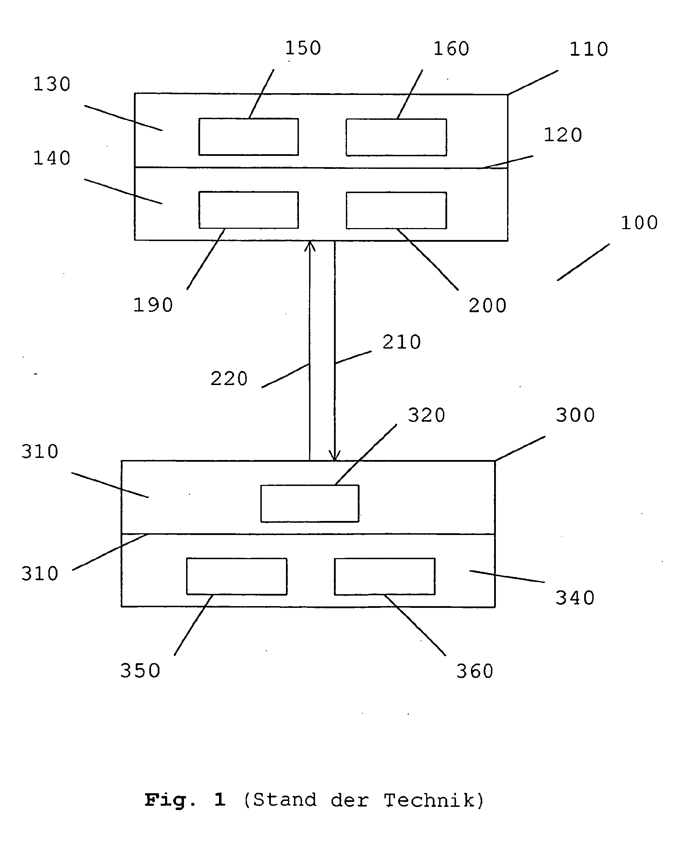

In Fig. 1 ist das Prinzipschema einer herkömmlichen Anordnung einer Client-Server-Konfiguration 100 dargestellt. In dieser Anordnung ist ein Client 110 vorgesehen, beispielsweise ein mobiles Endgerät der vorgenannten Art. Der Client 110 enthält eine Unterteilung 120, wobei die Unterteilung 120 in verschiedene Ebenen von Hard- und Software, beispielsweise nach einem Schichtenmodell vorgenommen werden kann. Vorliegend gibt die Unterteilung 120 eine Grenze zwischen einer Hardwareebene 130 und einer Softwareebene 140 an.

Innerhalb der Hardwareebene 130 sind vereinfacht eine Ausgabeeinheit 150, beispielsweise eine Anzeige, und eine Eingabeeinheit 160, beispielsweise ein Eingabefeld des mobilen Endgerätes vorgesehen, die eine Benutzerschnittstelle darstellen, mit der der Benutzer kommunizieren kann.

Innerhalb der Softwareebene 140 befindet sich ein Programm mit einem ersten Modul 190. Das erste Programmmodul 190 ist zur Ansteuerung von Ausgaben in der Hardwareebene 130 und zur Entgegennahme von Eingaben aus der Hardwareebene 130 ausgestaltet. Ein zweites Modul 200 ist zur Übertragung bzw. Weiterreichung und Empfang über eine bidirektionale Datenverbindung 210, 220, beispielsweise eine atmosphärische übertragungsstrecke der vorgenannten Art, ausgestaltet und steuert eine nichtgezeigte Hardware zur Übertragung.

In der Anordnung der Fig. 1 ist weiter ein Server 300 vorgesehen, der eine Hardwareebene 310 aufweist. In der Hardwareebene 310 ist ein Modul 320 enthalten, das für eine Ansteuerung einer ebenfalls nicht gezeigten Hardware zur Übertragung an den Client 110 bzw. für den Betrieb der Datenverbindung 210, 220 ausgestaltet ist.

Weiter enthält der Server 300 eine Unterteilung 330, die eine Grenze zwischen der Hardwareebene 310 und einer Softwareebene 340 darstellt. Durch die Unterteilung 330 soll im wesentlichen ein stark vereinfachtes ISO/OSI-Schichtenmodell angedeutet werden, bei dem eine Hardwareschicht als Hardwareebene 310 und eine Softwareschicht als Softwareebene 340 (sowie eine dazwischenliegende nichtgezeigte Transportschicht) verwendet wird.

In der Softwareebene 340, die auch eine Applikation enthält, befinden sich ein erstes Modul 350, das einen Inhalt (Content) enthält, beispielsweise eine Datenbank zur Verwaltung von Inhalten auf HTML-Basis, und ein zweites Modul 360, das eine Programmlogik enthält, beispielsweise ein Java-Script oder eine andere Script- oder Interpreter-basierte Sprache.

In der Softwareebene 340 kann die Applikation auch andere Bestandteile, relationale Datenstrukturen und damit korrespondierende Verwaltungsstrukturen enthalten.

Im Betrieb funktioniert die Client-Server-Konfiguration im wesentlichen so, dass der Client wie ein Ein/Ausgabe-Terminal arbeitet, also eine Art ausgelagerte Hardware des Servers darstellt.

Dabei läuft die Applikation also im wesentlichen nur auf dem Server, so dass Ein- und Ausgaben nur möglich sind, wenn der Client angeschlossen ist.

Soweit ist davon auszugehen, dass mehr Übertragung vom Server zum Client auf der Datenverbindung 220 stattfindet, als in umgekehrter Richtung auf der Verbindung 210. Wenn der Client zudem von sich aus im Rahmen der Applikation automatisch mit dem Server Kontakt aufnimmt, entstehen ständige Verbindungskosten.

Weiter ist der vorgenannte typische Lösungsansätze mit Latenzen behaftet, beispielsweise nach Auslastung des Servers, die merkliche Reaktionszeiten oder Verzögerungen bewirken können, welche die Nutzerverträglichkeit sichtlich begrenzen. Wenn zudem sich der Benutzer mit seinem Endgerät vom Kommunikationsdienstgebiet entfernt oder die Empfangsverhältnisse keine ausreichende Dienstqualität oder Möglichkeit der Verbindung bieten, kann dies zu einem plötzlichen Absturz der Applikation führen und einen eventuellen Datenverlust bedeuten. Beispielsweise müßte der Benutzer die Eingabe von Telefonnummern oder Terminen wiederholen - soweit möglich.

In US 2004/0192282 A1 ist eine herkömmliche server-zentrierte Applikationsplattform offenbart, die typischerweise auf einem Kommunikations-Netzwerk läuft und die Dienste für Mobiltelefone mit begrenzten oder variierenden Resourcen bereitstellt. Nachteilig an der vorgeschlagenen Lösung ist dabei, dass im wesentlichen ein ständiges Erfordernis der Kommunikation - jedenfalls immer bedingt bzw. mit der Voraussetzung besteht, mit dem Server, bis hin zu einer netzweiten Kommunikation mit mehreren Systemen, zu kommunizieren - vorgesehen ist und auch für die Funktion des Mobiltelefons erforderlich ist.

In EP-A-1 304 616 wird ein Verfahren zum Verarbeiten einer Datendatei unter der Verwendung von sog. Plug-In vorgeschlagen. Das Plug-In ist eine Software, das in Verbindung mit einem größeren Applikationsprogramm verwendet wird, um spezifische zusätzliche Dienste zu liefern, zum Beispiel die Funktionalität eines sog. Web-Browser, also eines Darstellungs- und Navigationsprogramms zu verbessern oder zu erweitern. Mithin handelt es sich bei einem Plug-In um eine nachträgliche Funktionserweiterung durch ein kleines Zusatzprogramm, das lediglich mit dem Hauptprogramm zusammenarbeitet oder um eine softwaremäßige Art der Anpassung, die einem Hauptprogramm vorgeschaltet ist.

In US 2004/0210433 A1 ist ein Vorschlag für eine Emulation eines Webservers für einen Webbrowser durch ein externes Zusatzgerät vorgeschlagen, das als ein Zwischenspeicher anzusehen ist.

Damit stehen herkömmliche Ansätze vor allem dem Anforderungsprofil einer drahtlosen Anwendung entgegen. Dies kann dazu führen, dass deren Praxistauglichkeit eingeschränkt wird oder zumindest vorübergehend verloren geht.

### ZUSAMMENFASSUNG DER ERFINDUNG

Eine Aufgabe der vorliegenden Erfindung besteht darin, in dieser Hinsicht den selbständigen Betrieb eines Client in einer Client-Server-Konfiguration zu verbessern.

Nach der Erfindung wird ein Client mit den Merkmalen von Anspruch 1 sowie ein Verfahren zum Betreiben eines Client mit den Merkmalen von Anspruch 30 bereit gestellt. Weitere Aspekte der Erfindung ergeben sich aus den übrigen Ansprüchen, der nachfolgenden Beschreibung wie aus den Zeichnungen.

Nach einem ersten Aspekt weist ein Client, insbesondere in einem mobilen Endgerät, demnach eine Speichereinheit auf, die extern zu einem Server ist, wobei eine vorgegebene Serverkonfiguration vom Server zum Client übertragen und im Client geladen ist, derart, dass eine Applikation im Client selbstständig ablauffähig ist und eine Simulation einer Serverfunktionalität durch den Client erfolgt.

Nach einem zweiten Aspekt enthält der Client eine Ein-/Ausgabeeinheit als Benutzerschnittstelle für einen Benutzer, ein erstes Modul, mit einer Speichereinheit, auf welcher Daten gespeichert sind ein zweites Modul, mit einer Speichereinheit, auf welcher ein Computerprogramm ablauffähig bereitgestellt ist einen internen Verbund, mit einer Schnittstelle und eine externe Verbindung mit einer Übertragungsstrecke zu einem Server. Der Server weist ein drittes Modul mit einer Speichereinheit, auf welcher Daten gespeichert sind und ein viertes Modul mit einer Speichereinheit, auf welcher ein Computerprogramm ablauffähig bereitgestellt ist auf, wobei das erste Modul im Client mit dem ersten Modul im Server, und das zweite Modul im Client mit dem zweiten Modul im Server derartig korrespondiert, dass eine Applikation im Client selbständig ablauffähig ist.

Nach einem dritten Aspekt wird ein Verfahren zum Betreiben eines Client in einem Client-Server-Netz bereitgestellt. Das Verfahren enthält die folgenden Schritte: Festlegen oder Bestimmen einer Serverkonfiguration im Server; Übertragen der Serverkonfiguration auf den Client; und Ausführen der Server-konfiguration mittels des Client anhand der auf dem Client geladenen Serverkonfiguration, derart, dass eine Applikation im Client selbstständig ablauffähig ist und eine Simulation einer Serverfunktionalität durch den Client erfolgt.

Nach einem vierten Aspekt wird ein Verfahren zur Verlagerung von Serverfunktionalität in den Client gemäß dem dritten Aspekt bereitgestellt.

Nach einem fünften Aspekt wird ein Client-Server-System mit einem Client nach einem der vorstehenden Aspekte bereitgestellt.

Nach einem sechsten Aspekt wird ein Server für ein Client-Server-System nach dem vorhergehenden Aspekt bereitgestellt.

Nach einem siebten Aspekt wird ein Computerprogramm bereitgestellt, welches das vorgenannte Verfahren ausführt.

Weitere Merkmale sind in den offenbarten Vorrichtungen und Verfahren enthalten oder gehen für den fachmännischen Leser aus der folgenden detaillierten Beschreibung von Ausführungsformen und den angefügten Zeichnungen hervor. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Darstellung des Aufbaus einer Client-Server-Konfiguration nach Stand der Technik;
- Fig. 2: ein schematische Darstellung einer Client-ServerKonfiguration gemäß einer ersten Ausführungsform der vorliegenden Erfindung; und
- Fig. 3: ein Prinzipschema eines Ausführungsbeispiels eines erfindungsgemäßen Verfahrens zum Betreiben eines ClientServer-Netzes auf einen Client einschließlich Transfer einer Serverkonfiguration auf einem Client.

### BESCHREIBUNG DER BEVORZUGTEN AUSFÜHRUNGSFORMEN

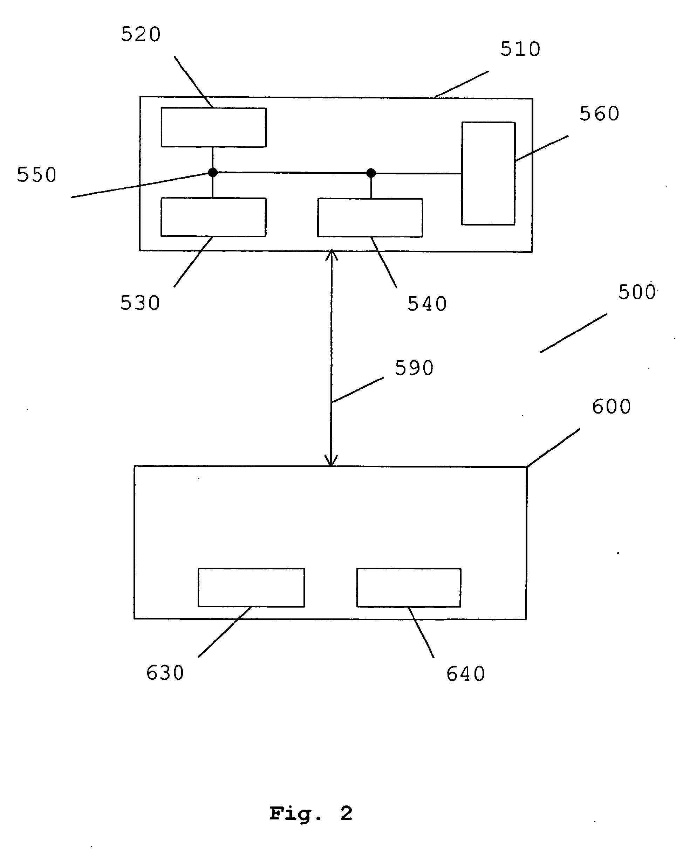

In Fig. 2 ist eine Client-Server-Konfiguration 500 gemäß einer ersten Ausführungsform der vorliegenden Erfindung dargestellt.

Im Unterschied zu Fig. 1 weist der Client 510 eine Ein-/Ausgabeeinheit 520, ein erstes Modul 530 mit einer Speichereinheit auf welcher Daten gespeichert sind, nachfolgend Inhalt genannt, und ein zweites Modul 540, auf welchem ein Computerprogramm (eine Programmlogik, bzw. ausführbarer Code) ablauffähig bereitgestellt wird, auf.

Das erste Modul 530 und das zweite Modul 540 sind an der Ausführung einer Applikation, beispielsweise ein Anwenderprogramm beteiligt, die Module sind also Teile iSv. Bestandteilen einer Applikation. Hierbei sei angemerkt, dass allgemein ein Modul beispielsweise bestimmte Funktionen, Daten oder Datenstrukturen beherbergen kann, wobei das Modul also eine Sammlung verschiedener Funktionen oder Klassen iSe. Aggregates darstellt. Daneben kann unter einem Modul auch eine funktionsfähige Einheit verstanden werden, beispielsweise ein gruppierbarer Bestandteil oder Baustein einer Applikation. Das Modul kann auch weitere Sub-Module enthalten, beispielsweise in einer hierarchischen Ebenenstruktur, wobei es geeignet vorgesehen werden kann, dass sich die Bestandteile eines Moduls über die Zeit auch verändern können.

In der Ein-/Ausgabeeinheit 520 sind beispielsweise eine Anzeige, ein Tastenblock, Eingabehilfen, aber auch Sensoren, Wandler, ein Mikrophon, Aktoren, ein Lautsprecher und andere Signalisierungsvorrichtungen und Schnittstellen enthalten, mit denen der Benutzer als Benutzerschnittstelle kommunizieren kann.

Dabei sind die Ausgabeeinheit 520 und die beiden Module 530 und 540 über einen internen Verbund 550 zusammengeschlossen. Der Verbund 550 weist Eigenschaften einer Schnittstelle, einer Busverbindung, eines Bussystems oder beispielsweise Parameter- oder Adressübergaben innerhalb des Clients 510 auf. Weiter kann auch ein Transferpuffer 560 vorgesehen sein, der über den Verbund 550 anschließbar ist.

Über eine externe Verbindung 590 zur Übertragung, beispielsweise eine Funkverbindungsschnittstelle ist der Client 510 mit einem Server 600 verbunden. Die Funkverbindungsschnittstelle ist dabei allgemein eine mobile Übertragungsstrecke, insbesondere eine Luftschnittstelle, eine Wasserschnittstelle oder eine Vakuumschnittstelle, die durch ein Medium hindurch reicht, an oder auf der Grenzfläche zwischen unterschiedlichen Medien betrieben werden kann.

An sich weist der Server 600 wie der Client 510 ein drittes Modul 630 mit einer Speichereinheit, auf welcher Daten gespeichert sind (Inhalt) und ein viertes Modul 640 mit einer Speichereinheit, auf welcher ein Computerprogramm ablauffähig bereitgestellt ist (Programmlogik oder Code). Die Ansteuerung der Übertragungsverbindung 590 wird dabei durch ein hier nicht gezeigtes Modul ausgeführt.

Dabei ist es vorgesehen, dass das Modul 630 im Server 600 mit dem Modul 530 im Client 510 korrespondiert, gleichfalls, dass das Modul 640 im Server 600 mit dem Modul 540 im Client 510 geeignet korrespondiert.

Nachdem ein Verbindungsaufbau von Client und Server stattgefunden hat, und der Transfer mit Datenaustausch (Herunterladen) der zuvor codierten bzw. festgelegten Serverkonfiguration durchgeführt wurde, wird auf dem Client im Wege der Serversimulation des Clients ein sog. Client-Engine installiert. Unter dem Engine wird die aus Software und Hardware gebildete Gesamtfunktionalität gemeint, die den Client antreibt.

Auf diesem Client-Engine steht am Ende des Systemtransfers ein System oder Betriebssystemteil beispielsweise mit einer Applikation zur Verarbeitung und Wiedergabe von Inhalten zur Verfügung, die das Modul 530 und das Modul 540 enthält bzw. die durch das Modul 530 und durch das Modul 540 konstituiert werden.

Weiter wird erfindungsgemäß eine erste Korrespondenz zwischen dem Modul 530 im Client und Modul 630 im Server und eine zweite Korrespondenz zwischen dem Modul 540 im Client und Modul 640 im Server in vorbeschriebener Weise ausgebildet.

Eine erste Korrespondenz zwischen Modul 530 und Modul 630 kann während der Laufzeit der Applikation bzw. Simulation der Serverkonfiguration auf dem Engine des Client oder auch einer zwischen Client und Server verteilten Applikation darin bestehen, dass zugehörige Daten zu bestimmten Zeitpunkten verlagert bzw. in geeigneter Weise, beispielsweise komplementär oder inkrementell, beispielsweise während einer Übertragung geeignet verschoben, ausgelagert, nachgeladen bzw. beispielsweise rückübertragen werden.

Darüberhinaus kann die Art der Korrespondenz sehr verschiedenartig sein. So kann die Applikation im Client 510 selbständig ablauffähig sein, indem eine flexible Zuordnungsmöglichkeit der Speichereinheiten der beteiligten Module ausgebildet ist. So kann die Zuordnungsmöglichkeit derart bestehen, dass datenseitig, d.h. also betreffend die Daten, das erste Modul 530 im Client 510 mit dem dritten Modul 630 im Server 600, und codeseitig, d.h. also betreffend den Code, das zweite Modul 540 im Client (510) mit dem vierten Modul 640 im Server 600 jeweilig eine elastische Kopplung zur Verteilung der Speichereinheiten zwischen Client und Server aufweist. Dabei wird also die jeweilige elastische Kopplung dadurch ausgebildet, dass das Modul 530 mit dem Modul 630 gekoppelt ist bzw. das Modul 540 mit dem Modul 640 gekoppelt ist.

Die Korrespondenz der beteiligten Module kann sehr reichhaltig ausgebildet werden, indem ein irgendwie gemeinschaftlich genutzter Speicherbereich vorgesehen und betrieben wird. Dieser kann zunächst als durchgehender Speicherbereich ausgebildet sein.

Dann kann die Modul-Korrespondenz als gekachelter Speicherbereich ausgebildet sein. Unter sog. Adresskacheln eines gekachelten Speicherbereiches werden einzelne adressmäßig beabstandete, also unzusammenhängenden, bzw. nicht durchgehend adressierte, d.h. nicht einfach linear aufeinanderfolgende Speicherbereiche, beispielsweise Ausschnitte aus einem Speicher, in Richtung auf- oder absteigender Adressen bzw. Adressbereichen, oder als überlappender Speicher bezeichnet.

Denkbar wäre auch eine Korrespondenz durch Speicherkompression, d.h. beispielsweise wird der eine Adressbereich im Modul 630 im Server 600 auf den Adressbereich im Modul 530 im Client 510 komprimiert abgebildet, indem vor der Übertragung eine verlustfreie informationserhaltende Kompression stattfindet. Vor oder während der Ausführung im Client kann dann eine Dekompression stattfinden. Dies kann für selten verwendete Funktionen von Interesse sein, die bei Bedarf ausgepackt werden können.

Eine andere, ohnehin in Datenströmen meist verlustbehaftet enthaltene, oder dafür verwendete Kompression bleibt davon unberührt.

Weiter kann die Korrespondenz der Speicherbereiche durch Überlappung, Duplizierung (Kopieren) oder Spiegelung oder bereichsweise Kopplung ausgestaltet sein, wobei es vorgesehen ist, ggf. erforderliche Synchronisierungen (Abgleiche) der Speicherbereiche der beteiligten Module zur Gewährleistung der Datenintegrität geeignet vorzusehen.

Auch können die client-server-mäßig korrespondierenden Speicherbereiche einen Puffer oder einen Pufferbereich, beispielsweise einen Durchschiebepuffer, eine Pipeline einen Ringpuffer,eine Eimerkette oder eine Kaskade ausbilden.

Denkbar ist auch eine elastische Kreuzkopplung zwischen dem ersten Modul 530 im Client 510 mit dem vierten Modul 640 im Server 600, und dem zweiten Modul 540 im Client 510 mit dem dritten Modul 630 im Server 600. Die so über Kreuz verbundenen Module können als Puffer der vorgenannten Art oder Ringpuffer betrieben werden, dass der Informationsfluß durch die Module die Bewegung einer Acht beschreibt.

Um eine sinnvolle Zuordnung bzw. Kopplung der clientseitigen Module mit den entsprechenden serverseitigen Modulen zu ermöglichen oder zu verbessern, ist auf dem Server eine sog. Profilmatrix gespeichert, welche die auf dem Client verfügbaren Resourcen näher bezeichnet. Sie kann weiter Daten über Benutzerspezifische Einstellungen bzw. Einstellungsmöglichkeiten des Clients enthalten. Grundsätzlich gibt die Profilmatrix das Hard- und Software-Profil in Form einer (mehrdimensionalen) Abbildung (mapping) der verfügbaren Resourcen auf dem Client wieder. Bestimmte Profilinformationen daraus beschreiben ein geeignetes Speichermodell beispielsweise aus effektiv reservierbarer Speichergröße, Datentransfergeschwindigkeiten, Prozessorleistungen.

Die Profilmatrix stellt weiter ein Mittel bereit, den Grad der Selbstständigkeit, mit dem die Applikation im Client ablauffähig ist, zu bestimmen. Dies betrifft auch die speichermäßige Verteilung der Applikation zwischen Server und Client iSe. überspannenden Applikation. Dabei bedeutet der Grad an Selbstständigkeit ein Verhältnis der verfügbaren Speichergrößen auf dem Client bzw. dem Server zur Gesamtgröße des Speichers aus der Summe der Speichergrößen von Client und Server, der von der Applikation in einem bestimmten Zeitintervall gefordert wird. Dies begründet eine Art online-offline-Tastverhältnis, einen Verbindungs-Wirkungsgrad (connectivity) und ein Client/Server-Codeverhältnis. Letzteres ist eine dynamische Angabe dafür, wie groß der speichmäßige Anteil an Code der Applikation ist, der auf dem Client läuft.

Weiter ist es vorgesehen, dass die Profilmatrix die flexible Zuordnungsmöglichkeit der Speichereinheiten der beteiligten Module beeinflußt.

Daneben kann die Profilmatrix die elastische Kopplung der korrespondierenden Module oder die Kreuzkopplung bestimmen.

Darüberhinaus kann die Profilmatrix oder Teile davon ggf. zeitvariant oder ereignisabhängig gesteuert werden, wobei die Steuerung wiederum applikationsabhängig erfolgen kann.

Eine dynamische Auslagerung oder das Nachladen bzw. Update kann, insbesondere wenn eine nachfolgende Ein- oder Ausgabe auf der Ein-/Ausgabeeinheit 520 im Client 510 erfolgt, durch eine ereignisabhängige, geräteabhängige, prioritäts-gesteuerte Strategie erfolgen. Diese Strategie kann unter Berücksichtigung der Profilmatrix erfolgen.

Für die Datenverschiebung im Wege der bidirektionalen Datenübertragung auf dem Client-Server-Netz kann auch ein adaptiver oder prediktiver bzw. gewichtender (oder gewichteter) Warteschlangen-Algorithmus vorgesehen sein, beispielsweise einer, der nach einem Cache-Schema oder einer regelbasierten, neuronalen, fraktalen oder Fuzzy-Ersetzungsstrategie eine Speicher- oder Datenstruktur variabel inkrementell oder auch differentiell, sog. differential update, aktualisiert.

Dabei wird erfindungsgemäß unter einem differentiellen Update eine Aktualisierung der Art verstanden, bei der (ähnlich wie bei der differentiellen Pulse-Code-Modulation) zwischen beispielsweise zwei aufeinanderfolgenden Samples, Zuständen oder beispielsweise graphischen Darstellungen nur die Veränderungen übertragen werden. Es muß beispielsweise keine komplette HTML-Seite neu übertragen werden, wenn sich einzelne Teile ändern, sondern nur diejenigen Teile, die sich geändert haben, oder die sich noch ändern können.

Weiter wird unter einem inkrementellem Update in dem vorliegenden Zusammenhang beispielsweise ein blockweises Nachladen verstanden, bei dem beispielsweise die Blockgröße variabel angepasst werden kann, um beispielsweise einen Download übertragungseffektiv zu gestalten. Dabei wird unter einem inkrementallen oder differentiellen Update ein sog. Delta-Update verstanden. Darüberhinaus können durch Aufzeichnung von Datenbewegungen (tracking), die den Update begleiten auch frühere, oder beispielsweise darauf basierend zukünftig, erwartete Änderungen berücksichtigt werden. Das Übertragungsverhalten kann in der Profilmatrix berücksichtigt werden.

Weiterhin kann auch ein dynamisches Auslagern zwischen Client und Server erfolgen, falls der Speicher im Client für eine bestimmte Applikation zu klein wird oder das Resourcen-Profil des Clients nur einen relativ kleinen Speicher herstellerseitig vorgesehen hat, so dass jedenfalls keine Grenze für die Lauffähigkeit einer erfindungsgemäßen Applikation an sich auftritt. Dies kann anhand der Profilmatrix geeignet berücksichtigt werden.

Beispielsweise kann sich ein Gesamtinhalt aus der Summe der Daten, die in den Modulen 530 und 630 gespeichert sind ergeben, so dass sich beispielsweise die Adressbereiche der Module 530 und 630 in vorbeschriebener Weise beispielsweise adresslinear anschließen können.

Eine zweite Korrespondenz zwischen Modul 540 und Modul 640 kann darin bestehen, dass eine Programmlogik, beispielsweise in der Form von Klassen zu bestimmten Zeitpunkten, verlagert wird. Dies kann je nach Applikation in geeigneter Weise geschehen, beispielsweise in der Applikation angelegt sein, oder beispielsweise sequentiell während einer Übertragung bzw. einem Download. Dabei werden Teile der Programmlogik zwischen Server und Client verschoben, abwechselnd oder wechselseitig relokatibel ausgelagert.

Beispielsweise können für einen Offline-Betrieb die im Client dafür erforderlichen Funktionen zuvor vom Server auf den Client übertragen und während der Laufzeit nachgeladen, geändert oder ersetzt werden.

Erforderliche Funktionen sind dabei solche Funktionen, die der Client benötigt, um selbstständig eine Applikation oder Teile davon auszuführen zu können. Dies kann insbesondere eine Funktion für eine Verarbeitung oder eine Vorverarbeitung von Benutzereingaben sein, die später im Server weiterverarbeitet werden, beispielsweise ein Vorausfüllen von Feldern in einer relationalen Datenstruktur oder die Bildung von Relationen im Zusammenhang mit gelernten oder benutzerspezifisch gewonnenen Informationen (Personalizing) einschließlich Ortsinformationen.

Daneben kann eine Funktion auch vorsehen, eine Aufbereitung von Informationen, eine Wiedergabe von Datenströmen, ein Defragmetieren des Speichers, oder eine Sendevorbereitung (Quueing) in Verbindung mit dem Puffer 560 oder Stapelverarbeitung durchzuführen. Der Puffer 560 kann dabei mit Verfahren wie bei der vorgenannten Datenverschiebung ausgestaltet sein.
Falls der Benutzer beispielsweise mehrere Nachrichten zu schreiben hat, können diese gesammelt und beim Senden sodann gebündelt übertragen werden.

Weiter kann auch die Software-Aktualisierung bzw. das Delta Update vorgesehen sein, bei der Teile eines der eingangsgenannten mobilen Inhalte oder Beschreibungen darüber in den Client geladen werden, um später als sog. Preview, d.h. als Teil oder Zusammenfassung des Inhaltes zur Kenntnis zu nehmen, anzuhören, zu lesen oder anzusehen.

Bei einem Offline-Betrieb, d.h. der Client läuft alleine bzw. eigenständig ohne Verbindung zum Server, ist der Client entweder willentlich, d.h. durch eine explizite Benutzereingabe vom Netz abgekoppelbar, oder unwillentlich, weil kein Netz zur Verfügung steht, oder weil beispielsweise ein Feldstärke-Indikator (RSSI = Radio Signal Strength Indicator), eine Übertragungslage mit Feldstärkenverhältnissen feststellt, bei dem eine Kommunikation unsicher ist, zu viele Übertragungsfehler auftreten, oder vermeidbare Kosten entstehen. Dabei kann die Applikation dem Benutzer bei abnehmender Übertragungsgüte empfehlen, selbst auf die Offline-Betriebsart zu wechseln und soweit möglich noch etwas Programmcode auf Vorrat laden bzw. einzulagern.

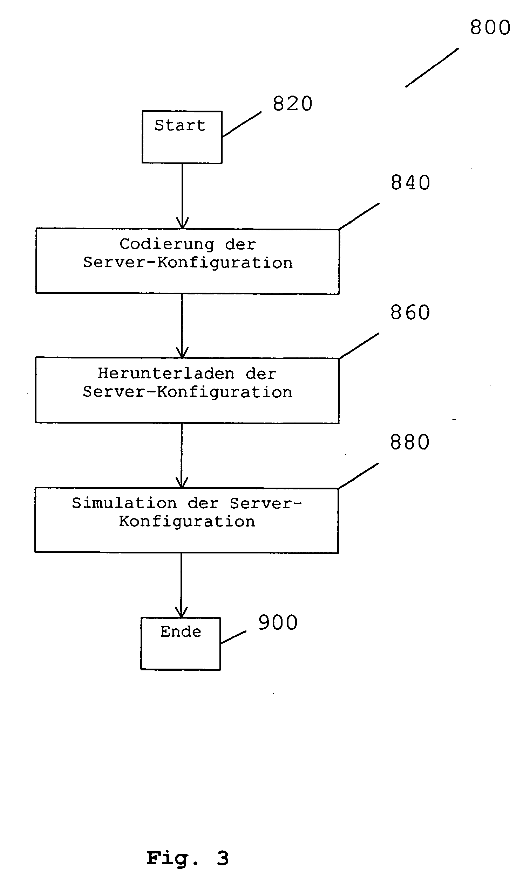

Fig. 3 verdeutlicht ein Ausführungsbeispiel eines Verfahrenszum Betreiben eines Client-Server-Netzes auf einen Client einschließlich dem Transfer einer Serverkonfiguration auf einen Client.

Der Transfer beginnt nach dem Start 800 bis zum Ende 900 und beschreibt die einzelnen Schritte mit dem ein Client in die Lage versetzt wird, selbstständig Applikationen (auch) ohne Verbindung zum Server auszuführen.

Dabei wird beispielsweise im Client eine Verbindung zum Server oder ein Serververhalten simuliert, so dass es für den Benutzer im wesentlichen keinen Unterschied darstellt, ob nun der Client mit dem Server verbunden ist (Online-Betriebsart) oder ob der Client in eigener Regie die Applikation ausführt (Offline-Betriebsart).

Der erste Schritt 820 stellt den Eintritt in die Transferroutine dar. Dabei kann beispielsweise in einer durch die Anmelderin oder herstellungsseitigen Vorkonfiguration oder Preset-Einstellung vorgesehen sein, dass der Client als stand-alone Client ausbildbar ist. Weiter kann auch vorgesehen sein, dass der Benutzer den Client mit dieser zusätzlichen Funktionalität ausstatten kann.

Im nächsten Schritt 840 erfolgt die Codierung bzw. Bestimmung oder Festlegung einer Serverkonfiguration. Dies kann in geeigneter Weise anhand der Profilmatrix erfolgen.

Dabei können beispielsweise entsprechende Datenstrukturen oder zu übertragende Inhalte vorbereitet oder formatiert werden, wobei hierfür beispielsweise auch eine server- bzw. senderseitige Kompression mit einer korrespondierenden client- bzw. empfängerseitigen Dekompression (eventuell auch iVm. Datenmodulation oder Demodulation eines Datensignals bzw. einer modulierten Datensignalfolge) infrage kommt. Alternativ kann die Kompression auch erst nach Übertragung im Client erfolgen. Daneben kann im Fall einer Modulation/Demodulation eine Demodulation beispielsweise auch durch eine (nochmalige) Modulation mit dem gleichen Verfahren oder mit einer zur vorhergehenden Modulation komplementären, inversen Funktion, Korresspondenz oder Abbildung (Rücktransformation) erfolgen, so dass die beiden Begriffe Modulation bzw. Demodulation aus- bzw. vertauschbar sind. Vorgenanntes gilt für Kompression und Dekompression in ähnlicher Weise.

Im darauffolgenden Schritt 860 erfolgt das Herunterladen der Serverkonfiguration in Push oder Pull. Hierbei wird der Client entsprechend eingerichtet, indem die zuvor codierten oder auch gepackten Daten oder Datenstrukturen entsprechend entpackt oder dekodiert werden. Dabei wird beispielsweise eine Benutzeroberfläche eines Computerprogramms oder eine Applikation zum Betrieb derselben installiert, die auf dem Client selbstständig ausführbar ist.

Im nächsten Schritt 880 erfolgt die Simulation der Serverkonfiguration mittels des Client Engine. Dabei wird die Applikation entsprechend gestartet.

Weiter können bei der Übertragung zwischen und auch innerhalb der vorgenannten Schritte entsprechende, nicht gezeigte, an sich bekannte Verfahren oder Algorithmen zur Identifizierung und Fehlerkorrektur bzw. Wiederholung der Übertragung wie auch Paritätsprüfungen oder Prüfsummen zur Sicherung und Überwachung der Daten-Integrität vorgesehen sein.

Ein Vorteil der obigen Ausführungsbeispiele der Erfindung besteht darin, einen Weg zu bereit zu stellen, mit dem sich Strukturen eines Clients über herstellerseitig bestehende oder produktspezifisch immanente Benutzer-Einschränkungen bei Softwareentwicklung und Hardwareplattformen hinweg verbessern oder überwinden lassen.

Den obigen Ausführungsbeispielen liegt die Erkenntnis zugrunde, dass mithilfe der Verlagerung von Content einerseits und dem Programm bzw. Programmcode (Programmlogik) andererseits, vom Server in einen Client eine verbesserte Berücksichtigung des Anforderungsprofils geschaffen werden kann. Dabei kann der Content beispielsweise in einer Auszeichnungssprache, HTML, SGML, oder ein freies Derivat davon ausgestaltet, realisiert, beschrieben oder ausführbar sein. Die Programmlogik kann beispielsweise als Klassen, Objekte oder Funktionen beispielsweise mit Java-Script oder mit JMEE programmierten Modulen ausgestaltet, realisiert, beschrieben oder ausführbar sein.

Beispielsweise kann es vorgesehen oder angezeigt sein, HTML und JavaScript in einer ersten Version eines Clients nicht zu verwenden, wenn sie vom Resourcen- bzw. Speicherplatzbedarf zu mächtig oder zu groß für den Client sind. Für den Inhalt kann eine Seitenbeschreibungssprache vorgesehen sein, die auf HTML basiert, sich daran orientiert oder, die frei sein kann und eher mit SGML zu vergleichen ist. Die Logik der Applikation, also das Programm selbst, muß nicht notwendigerweise in JavaScript abgebildet sein, sondern kann sich eher in JMEEprogramierten Modulen wiederfinden, wenn auch hier zu viel Speicherplatz verloren gehen würde. Allerdings ist es in späteren Versionen des Clients jedoch durchaus denkbar, beispielsweise aufgrund von mehr zur Verfügung stehendem Speicherplatz und größerer CPU-Leistung auf schon vorhandene Seitenbeschreibungs- und Programmlogiken zurückzugreifen.

Gemäß des vorliegenden Ausführungsbeispiels wird durch die Applikation eine Validierung von User-Eingaben ohne das Entstehen von Verbindungskosten ermöglicht, als dies auf dem Client stand-alone, also selbstständig, erfolgen kann.

Insbesondere läßt sich der Zustand, in dem sich die Applikation befindet, transparent darstellen. Schon damit können kritische Zustände bishin zu potenziellen Gefahren eines Datenverlustes vermieden und die Verfügbarkeit erhöht werden. Weiter können geeignete Strategien zur Defragmentierung des Speichers vorgesehen werden.

Weiter ist es möglich, eine zeitnahe Auswertung der Eingaben und User-Feedback zu ermöglichen, als Rückmeldungen vom Server dabei nicht unbedingt erforderlich sind. Damit läßt sich beispielsweise der Benutzer bei der Bearbeitung von geeigneten Formularen unterstützen.

Bevorzugt ist eine mobile Beispiel-Applikation, insbesondere eine Kamera-basierte Multimedia-Applikation vorgesehen, die es ermöglicht, auf intuitive Weise eine MMS-Nachricht im Client aufzubereiten und erst nach deren Fertigstellung mit eventuellen anderen Daten zu versenden.

Im Ergebnis wird nach der vorbeschriebenen Struktur ein Client mit vorteilhaften Übertragungs- und Benutzungseigenschaften definiert.

Die strukturellen Vorteile des Ausführungsbeispiels bestehen darin, dass der Client in der Lage ist, eine Server-Funktionalität zu bieten bzw. diese zu simulieren, so dass die Anwendungen selbstständig ausgeführt werden können.

Weiter wird sichergestellt, dass die einzelnen Module auf der Clientseite unabhängig vom Bestehen einer Serververbindung während der Laufzeit der Applikation, also auch außerhalb eines Kommunikationsdienstgebietes konfigurierbar abgestimmt sind.

Weiter bestehen signifikante Vorteile, dass der Benutzer auch auf den Ablauf der Applikation im Wege veränderbarer Einstellungen einwirken kann. Dies wird erfindungsgemäß durch die Zurverfügungstellung dynamischer Menüstrukturen erreicht, die eine kontextsensitive dynamische Navigation ermöglichen. Letzteres bedeutet die Unterstützung der Bewegung des Benutzers in einer Menüstruktur, d.h. im wesentlichen die Bedienung der Applikation durch Zurverfügungstellung von geeigneten Hilfsmitteln, wie die Bereitstellung bestimmter Menüelemente, Informationen oder Funktionen abhängig von dem Kontext einer gerade angezeigten Information oder Seite (Display-Inhalt) bzw. abhängig von einem Zustand oder Ereignis in dem sich die Applikation befindet.

Weiter kann auch eine dynamischen Personalisierung ausgebildet sein. Dabei kann die Benutzer-Navigation, d.h. beispielsweise das Benutzerverhalten auf der Basis der vom Benutzer angesteuerten Menüelemente, Dienste oder Internetseiten, bei einer Server-Verbindung oder nach einer bestimmen Anzahl an Verbindungen zum Server übertragen werden und dazu dienen, den Client entsprechend der Navigation zu adaptieren, also zu personalisieren. Dies kann hinsichtlich vorbezeichneter dynamischer Menü-Struktur, oder dem Content, geschehen. Dieser so aktualisierte Client wird dem Benutzer dann als Update angeboten.

Es gelingt durch die Definition eines Clients Teile der Server-Funktionalität organisatorisch und technisch optimiert einzusetzen und geeignet in den Client zu verlagern.

Mit anderen Worten lassen sich insbesondere Anpassungsverluste an das Benutzerverhalten und an das Anwortverhalten des Clients für den Benutzer, Zeitverluste im Falle einer Nichtverfügbarkeit des Kommunikationsdienstes oder des Servers an sich und Übertragungskosten vermeiden, die bei herkömmlichen Ansätzen systemimmanent vorgesehen auftreten.

Durch die erfindungsgemäße Definition eines Clients wird damit sowohl die Herstellung von komfortablen Funktionen oder Software auch die Unterstützung von mobilen Netzen unter beschränkten Resourcen möglich.

Die Definition des Clients ermöglicht zusätzlich eine schnellere, gebündelte und damit insgesamt kostengünstigere Kommunikation mit dem Server, da der Benutzer durch sein Verhalten die Kosten steuern, jedenfalls mitbestimmen kann. Dies führt zu einer höheren Nutzerzufriedenheit.

Mithin erlaubt die vorliegende Erfindung eine abgestimmte und sichere Benutzerführung mit der Möglichkeit der Abschaltung bestimmter oder Anordnung geeigneter Menueelemente in der Client-Applikation. Damit läßt sich auch eine sichere Applikation vorsehen beispielsweise für Steuerungen.

Weiter kann eine Personalisierung der Anwendung an sich vorgesehen werden. Hierbei wird auf das Benutzerverhalten und anhand der verarbeiteten Daten eine Möglichkeit der Konfigurierbarkeit der Applikation gegeben. Die Reifezeit wird verkürzt, die Kosten verringert, die Bedienung vereinfacht.

Ein Ausführungsbeispiel der vorliegenden Erfindung weist die wesentlichen relevanten Funktionsgruppen eines intelligenten Clients 510 auf.

Zur Lösung der Aufgabe dient auch ein Verfahren. Im Folgenden werden die einzelnen Verfahrensschritte näher beschrieben. Die wesentlichen Schritte müssen nicht notwendigerweise in der angegebenen Reihenfolge durchgeführt werden, und das Verfahren kann auch weitere, nicht genannte Schritte aufweisen.

Zunächst wird in einem ersten Schritt auf dem Server die Serverkonfiguration für den Client codiert.

In einem zweiten Schritt erfolgt der Datenaustausch, bei dem die codierte bzw. festgelegte oder ausgewählte Serverkonfiguration an den Client gesendet wird (Herunterladen).

In einem dritten Schritt erfolgt die Simulation der Serverkonfiguration auf dem Client. Unter Simulation ist dabei ein Verhalten des Clients zu verstehen, bei dem beispielsweise das Verhalten eines gerade nicht vorhandenen Servers nachgebildet wird.

Ferner gehört zum Umfang der Erfindung ein Computerprogramm, das bei Ablauf auf einem Computer oder auf einer Mehrzahl von Computern eines Computer-Netzwerks das erfindungsgemäße Verfahren in einer seiner Ausgestaltungen ausführt.

Weiterhin gehört zum Umfang der Erfindung ein Computerprogramm mit Befehlen/Instruktionen (Programmcode-Mitteln), um das erfindungsgemäße Verfahren in einer seiner Ausgestaltungen durchzuführen, wenn das Programm auf einem Computer oder auf einer Mehrzahl von Computern eines Computer-Netzwerks, insbesondere einem mobilen Client-Server Netzwerk ausgeführt wird. Insbesondere können die Befehle auf einem computerlesbaren Datenträger gespeichert sein.

Außerdem gehört zum Umfang der Erfindung ein Datenträger, auf dem eine Datenstruktur gespeichert ist, die nach einem Laden in einen Arbeits- und/oder Hauptspeicher eines beispielsweise mobilen Computers oder einer Mehrzahl von Computern eines Computer-Netzwerks beispielsweise der vorbetrachteten Art im Kommunikationsdienstgebiet das erfindungsgemäße Verfahren in einer seiner Ausgestaltungen im Sinne der Erfindung ausführen kann.

Auch gehört zum Umfang der Erfindung ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einem Computer oder auf einer Mehrzahl von Computern eines Computer- bzw. Mobilfunk-Netzwerks ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann im Sinne der Erfindung insbesondere über ein Datenübertragungsnetz beispielweise innerhalb eines Kommunikationdienstgebietes oder das Internet geeignet verteilt werden.

Schließlich gehört zum Umfang der Erfindung ein moduliertes Datensignal, welches von einem Computersystem oder von einer Mehrzahl von Computern eines Computer-Netzwerks ausführbare Instruktionen zum Ausführen des erfindungsgemäßen Verfahrens in einer seiner Ausgestaltungen enthält. Als Computersystem kommen sowohl das Endgerät als mobiler Stand-alone Computer in Betracht, als auch ein Netzwerk von Rechnern, beispielsweise ein hausinternes, geschlossenes Netz, oder auch Rechner, die über das Internet miteinander verbunden sind.

Ferner kann das Computersystem durch eine Client-Server-Konstellation oder höchstvorsorglich sogar als Client-Client- bzw. Peer-to-Peer-Konfiguration beispielsweise bei Spielen oder für Service-Aufgaben realisiert sein, wobei Teile der Erfindung auf dem Server, andere auf einem Client ablaufen. Dabei übernimmt der weitere sog. Near-Client dann eine ähnliche Rolle wie ein Server.

Neben der Ortung des Endgerätes über ein GPS-Verfahren kann eine Lokalisation desselben auch im Wege eines Mini-GPS, beispielsweise aufgrund der Auswertung von Laufzeitdifferenzen über benachbarte Basis-Stationen Mobilstationen, erfolgen.

Alle Publikationen und existierende Systeme, die in dieser Beschreibung genannt sind, werden per Bezugnahme in diese einbezogen. Obgleich hier bestimmte Vorrichtungen und Systeme, die in Übereinstimmung mit den Lehren der Erfindung gebaut wurden, beschrieben worden sind, ist der Schutzbereich dieses Patents nicht hierauf beschränkt. Im Gegenteil, das Patent deckt alle Ausführungsformen der Lehren der Erfindung ab, die wörtlich oder unter der Äquivalenzdoktrin in den Schutzbereich der angefügten Ansprüche fallen.

## Patentansprüche

1. Client, insbesondere in einem mobilen Endgerät, in einem Client-Server-Netz (500), mit:
einer Speichereinheit (530, 540) extern zu einem Server (600), wobei eine vorgegebene Serverkonfiguration vom Server (600) zum Client (510) übertragen und im Client (510) geladen ist, derart, dass eine Applikation im Client (510) selbstständig ablauffähig ist und eine Simulation einer Serverfunktionalität durch den Client erfolgt.

2. Client nach Anspruch 1, der aufweist:
eine Ein-/Ausgabeeinheit (520) als Benutzerschnittstelle für einen Benutzer;
ein erstes Modul (530) mit einer Speichereinheit, auf welcher Daten gespeichert sind ;
ein zweites Modul (540) mit einer Speichereinheit, auf welcher ein Computerprogramm ablauffähig bereitgestellt ist ;
einen internen Verbund (550) mit einer Schnittstelle, und eine externe Verbindung (590) mit einer Übertragungsstrecke zu einem Server (600), wobei der Server (600) ein drittes Modul (630) mit einer Speichereinheit, auf welcher Daten gespeichert sind und ein viertes Modul (640) mit einer Speichereinheit, auf welcher ein Computerprogramm ablauffähig bereitgestellt ist, aufweist, wobei das erste Modul (530) im Client (510) mit dem dritten Modul (630) im Server (600), und das zweite Modul (540) im Client (510) mit dem vierten Modul (640) im Server (600) eine Korrespondenz aufweist, dass die Applikation im Client (510) selbständig ablauffähig ist.

3. Client nach Anspruch 2, **dadurch gekennzeichnet, dass** die Applikation im Client (510) selbständig ablauffähig ist, indem eine flexible Zuordnungsmöglichkeit der Speichereinheiten der beteiligten Module ausgebildet ist.

4. Client nach einem der Ansprüche 2 bis 3, bei dem die Zuordnungsmöglichkeit derart besteht, dass datenseitig das erste Modul (530) im Client (510) mit dem dritten Modul (630) im Server (600), und codeseitig das zweite Modul (540) im Client (510) mit dem vierten Modul (640) im Server (600) jeweilig eine elastische Kopplung zur Verteilung der Speichereinheiten zwischen Client und Server aufweist.

5. Client nach einem der Ansprüche 2 bis 4, bei dem das erste Modul (530) im Client (510) mit dem dritten Modul (630) im Server (600) die Korrespondenz ausbildet, indem ein durchgehender Speicherbereich gebildet wird.

6. Client nach einem der Ansprüche 2 bis 5, bei dem das zweite Modul (540) im Client (510) mit dem vierten Modul (640) im Server (600) die Korrespondenz ausbildet, indem ein durchgehender Speicherbereich gebildet wird.

7. Client nach einem der Ansprüche 5 oder 6, bei dem der Speicherbereich gekachelt ist.

8. Client nach einem der Ansprüche 5 oder 6, bei dem der Speicherbereich überlappend, dupliziert oder gespiegelt ist.

9. Client nach einem der Ansprüche 5 oder 6, bei dem der Speicherbereich einen Puffer ausbildet.

10. Client nach Anspruch 9, bei dem der Puffer bereichsweise als Ringpuffer betrieben wird.

11. Client nach einem der Ansprüche 2 bis 10, bei dem die Zuordnungsmöglichkeit derart besteht, dass das erste Modul (530) im Client (510) mit dem vierten Modul (640) im Server (600), und das zweite Modul (540) im Client (510) mit dem dritten Modul (630) im Server (600) eine elastische Kreuzkopplung zur Verteilung der Speichereinheiten zwischen Client und Server aufweist.

12. Client nach Anspruch 11, bei dem die an der Kreuzkopplung beteiligten Module (530, 630, 540, 640) als Ringpuffer derart betrieben wird, dass der Informationsfluß durch die Module die Bewegung einer Acht umfasst.

13. Client nach einem der vorhergehenden Ansprüche, bei dem im Server eine Profilmatrix gespeichert ist, welche die auf dem Client verfügbaren Resourcen näher bezeichnet.

14. Client nach Anspruch 13, bei dem die Profilmatrix, den Grad der Selbstständigkeit, mit dem die Applikation im Client ablauffähig ist, bestimmt.

15. Client nach Anspruch 13 oder 14, bei dem die Profilmatrix die flexible Zuordnungsmöglichkeit der Speichereinheiten der beteiligten Module beeinflußt.

16. Client nach einem der Ansprüche 13 bis 15, bei dem die Profilmatrix die elastische Kopplung der korrespondierenden Module bestimmt.

17. Client nach einem der Ansprüche 13 bis 16, bei dem die Profilmatrix die Kreuzkopplung bestimmt.

18. Client nach einem der Ansprüche 13 bis 17, bei dem die Teile der Profilmatrix zeitvariant oder ereignisabhängig gesteuert werden können.

19. Client nach einem der vorhergehenden Ansprüche, bei dem die Applikation derart auf dem Client (510) ablauffähig ist, um eine Validierung von User-Eingaben ohne ein Entstehen von Verbindungskosten zu ermöglichen.

20. Client nach einem der vorhergehenden Ansprüche, bei dem ein Zustand, in dem sich die Applikation befindet, transparent darstellbar und zum Server (600) übertragbar ist.

21. Client nach einem der vorhergehenden Ansprüche, bei dem die Applikation derart ablauffähig ist, um eine zeitnahe Auswertung von Benutzer-Eingaben und eine Rückmeldung an einen Benutzer bereitzustellen.

22. Client nach einem der vorhergehenden Ansprüche, bei dem die Applikation derart ablauffähig ist, um dem Benutzer zu ermöglichen, ein interaktives Benutzerprofil mit einer Menustruktur zu erstellen, bei dem der Benutzer einzelne Elemente oder Inhalte ausschalten kann.

23. Client nach einem der vorhergehenden Ansprüche, bei dem die Applikation derart ablauffähig ist, um eine dynamische Auslagerung oder ein dynamisches Nachladen zu unterstützen.

24. Client nach einem der vorhergehenden Ansprüche, bei dem die Applikation derart ablauffähig ist, dass sie eine kontextsensitive dynamische Menustruktur bereitstellt, bei der bestimmte Menüelemente, Informationen oder Funktionen auftreten, die abhängig von dem Kontext, einem Zustand oder Ereignis sind, in dem sich die Applikation befindet.

25. Client nach einem der vorhergehenden Ansprüche, bei dem die Applikation derart ablauffähig ist, dass sie eine dynamische Personalisierung unterstützt, bei der Benutzer-Navigation auf dem Client zum Server übertragen wird und ermöglicht, den Client auf der Basis der Navigation zu adaptieren.

26. Client nach einem der Ansprüche 2 bis 25, bei dem eine Übertragung zwischen dem ersten Modul (530) und dem dritten Modul (630) mittels eines Übertragungsverfahrens durchgeführt wird, das eine Übertragung mittels Kanalbündelung oder mehrerer gleichzeitig belegbarer Kanäle unterschiedlicher Übertragungssysteme erlaubt.

27. Client nach einem der Ansprüche 2 bis 26, bei dem eine Übertragung zwischen dem zweiten Modul (540) und dem vierten Modul (640) mittels einem Übertragungsverfahren durchgeführt wird, das eine Übertragung mit mehreren gleichzeitig belegbaren Kanälen unterschiedlicher Übertragungssysteme erlaubt oder eine Übertragung mittels Kanalbündelung erlaubt.

28. Client nach einem der vorhergehenden Ansprüche, bei dem die Applikation eine Verbindung vom Client (510) zum Server (600) auf- und abbauen kann, die zeitsteuerbar ist.

29. Client nach einem der vorhergehenden Ansprüche, bei dem die Verbindung vom Client (510) zum Server (600) ereignis-, anforderungsabhängig oder semipermanent ist.

30. Verfahren zum Betreiben eines Client in einem Client-Server-Netz (500), mit folgenden Schritten:
Festlegen oder Bestimmen (840) einer Serverkonfiguration im Server (600);
Übertragen (860) der Serverkonfiguration auf den Client(510); und
Ausführen (880) der Serverkonfiguration mittels des Client (510) anhand der auf dem Client (510) geladenen Serverkonfiguration, derart, dass eine Applikation im Client (510) selbstständig ablauffähig ist und eine Simulation einer Serverfunktionalität durch den Client (510) erfolgt.

31. Verfahren nach Anspruch 30, bei welchem bei einem der Schritte eine differentielle oder inkrementelle Datenverschiebung (Delta Update) durchgeführt wird.

32. Verfahren nach Anspruch 30 oder 31, bei dem die Serverkonfiguration als Datenpaket selbst auf dem Client ablauffähig ist.

33. Verfahren nach einem der Ansprüche 30 bis 32, bei dem die Serverkonfiguration als Push oder Pull erfolgt.

34. Verfahren nach einem der Ansprüche 30 bis 33, bei dem die Serverkonfiguration als Broadcast erfolgt.

35. Verfahren nach einem der Ansprüche 30 bis 34, bei welchem der Schritt der Festlegung oder Bestimmung der Serverkonfiguration anhand einer Profilmatrix erfolgt.

36. Verfahren nach Anspruch 35, bei dem die Profilmatrix, den Grad der Selbstständigkeit, mit dem die Applikation im Client ablauffähig ist, bestimmt.

37. Verfahren nach Anspruch 35 oder 36, bei dem die Teile der Profilmatrix zeitvariant oder ereignisabhängig gesteuert werden.

38. Verfahren nach einem der Ansprüche 30 bis 37, bei welchem die Applikation derart auf dem Client (510) ablauffähig ist, um eine Validierung von User-Eingaben ohne ein Entstehen von Verbindungskosten zu ermöglichen.

39. Verfahren nach einem der Ansprüche 30 bis 38, bei welchem die Applikation derart ablauffähig ist, um eine zeitnahe Auswertung von Benutzer-Eingaben und eine Rückmeldung an einen Benutzer bereitzustellen.

40. Verfahren nach einem der Ansprüche 30 bis 39, bei welchem die Applikation derart ablauffähig ist, um dem Benutzer zu ermöglichen, ein interaktives Benutzerprofil mit einer Menustruktur zu erstellen, bei dem der Benutzer einzelne Elemente oder Inhalte ausschalten kann.

41. Verfahren nach einem der Ansprüche 30 bis 40, bei welchem die Applikation derart ablauffähig ist um eine dynamische Auslagerung oder ein dynamisches Nachladen zu unterstützen.

42. Verfahren nach einem der Ansprüche 30 bis 41, bei welchem die Applikation derart ablauffähig ist, dass sie eine kontextsensitive dynamische Menustruktur bereitstellt, bei der bestimmte Menüelemente, Informationen oder Funktionen auftreten, die abhängig von dem Kontext, einem Zustand oder Ereignis sind, in dem sich die Applikation befindet.

43. Verfahren nach einem der Ansprüche 30 bis 42, bei welchem die Applikation derart ablauffähig ist, dass sie eine dynamische Personalisierung unterstützt, bei der Benutzer-Navigation auf dem Client zum Server übertragen wird und ermöglicht, den Client auf der Basis der Navigation zu adaptieren.

44. Verfahren nach einem der Ansprüche 30 bis 43, bei dem eine Übertragung zwischen einem zweiten Modul (540) und einem vierten Modul (640) mittels einem Übertragungsverfahren durchgeführt wird, das eine Übertragung mit mehreren gleichzeitig belegbaren Kanälen unterschiedlicher Übertragungssysteme erlaubt oder eine Übertragung mittels Kanalbündelung erlaubt.

45. Verfahren nach einem der Ansprüche 30 bis 44, bei dem die Applikation eine Verbindung vom Client (510) zum Server (600) auf- und abbaut, die zeitsteuerbar ist.

46. Client-Server-System umfassend einen Client nach einem der Ansprüche 1 bis 29.

47. Computerprogramm zum Ablauf auf einem Client in einem Client-Server-Netz, wobei das Computerprogramm Befehle umfaßt, die veranlassen, dass ein Verfahren nach einem der Ansprüche 30 bis 45 ausgeführt wird.

48. Computerprogramm zum Ablauf auf einem Server in einem Client-Server-Netz, wobei das Computerprogramm Befehle umfaßt, die veranlassen, dass ein Verfahren nach einem der Ansprüche 30 bis 45 ausgeführt wird.

49. Computerprogramm nach Anspruch 47 oder 48, mit Befehlen oder Programmcode-Mitteln, um das Verfahren auszuführen, wenn das Computerprogramm auf einem Mikrocontroller, Computer oder auf einer Mehrzahl von Computern eines Computer-Netzwerks oder auf einer Mehrzahl von Mikrocontrollern eines mobilen Mikrocontroller-Netzwerks abläuft.

50. Computerprogramm nach einem der Ansprüche 47 bis 49, das auf einem maschinenlesbaren Datenträger gespeichert ist.

51. Computerprogramm nach einem der Ansprüche 47 bis 50, das als für die Übersendung über das Netzwerk geeignete Signalfolge ausgebildet ist.

## Claims

1. A client, in particular in a mobile terminal device, in a client-server network (500), comprising:
a memory unit (530, 540) being external to a server (600) wherein a predefined server configuration is transferred from the server (600) to the client (510), and said server configuration is loaded in the client (510) such that an application is self-dependently executable in the client (510) and a simulation of a server function is performed by the client.

2. The client according to claim 1 further comprising:
an input-output unit (520) as user interface for a user;
a first module (530) with a memory unit, on which data is stored;
a second module (540) with a memory unit, on which
a computer program is provided to be self-dependently executable;
an internal connection (550) with an interface, and an external connection (590) with a transmission path to a server (600), wherein the server (600) comprises a third module (630) with a memory unit, on which data is stored and a fourth module (640) with a memory unit, on which a computer program is provided to be executable, where the first module (530) in the client (510) with the third module (630) in the server, and the second module (540) in the client (510) comprises a correspondence with the fourth module (640) in the server such that the application is self-dependently executable in the client (510).

3. The client according to claim 2, wherein the application in the client (510) is self-dependently executable by forming a flexible possibility of assignment of the memory units of the participating modules.

4. The client according to one of the claims 2 to 3, wherein the possibility of assignment consists such that, on the data side, the first module (530) in the client (510) with the third module (630) in the server (600), and, on the code side, the second module (540) in the client (510) with the fourth module (640) in the server (600) each comprise an elastical coupling for distribution of the memory units between client and server.

5. The client according to one of the claims 2 to 4, wherein the first module (530) in the client (510) forms a correspondence with the third module (630) in the server, by forming a contiguous memory area.

6. The client according to one of the claims 2 to 5, wherein the second module (540) in the client (510) forms the correspondence with the fourth module (640) in the server (600) by forming a contiguous memory area.

7. The client according to one of the claims 5 or 6, wherein the memory area is tiled.

8. The client according to one of the claims 5 or 6, wherein the memory area is overlapping, duplicated or mirrored.

9. The client according to one of the claims 5 or 6, wherein the memory area is formed as a buffer.

10. The client according to claim 9, wherein the buffer is operated as a ring-buffer area-wise.

11. The client according to one of the claims 2 to 10, wherein the possibility of assignment is such that the first module (530) in the client (510) with the fourth module (640) in the server, and the second module (540) in the client (510) with the third module (630) in the server (600) comprises an elastical cross-coupling for distribution of the memory units between client and server.

12. The client according to claim 11, wherein the modules participating at the cross-coupling are operated as ring-buffer such that the information flow through the modules comprehends a movement of an eight.

13. The client according to one of the preceding claims, wherein a profile matrix is stored in the server, which closer denotes the resources being available on the client.

14. The client according to claim 13, wherein the profile matrix determines the degree of the self-dependency with which the application is executable on the client.

15. The client according to one of the claims 13 or 14, wherein the profile matrix influences the flexible possibility of assignment of the memory units of the participating modules.

16. The client according to one of the claims 13 to 15, wherein the profile matrix determines the elastic coupling of the corresponding modules.

17. The client according to one of the claims 13 to 16, wherein the profile matrix determines the cross coupling.

18. The client according to one of the claims 13 to 17, wherein parts of the profile matrix can be controlled time variant or event-dependent.

19. The client according to one of the preceding claims, wherein the application is executable on the client (510) such kind in order to enable a validadation of user-inputs without the generation of connection costs.

20. The client according to one of the preceding claims, wherein a state in which the application is located, is transparently representable and transmittable to the server (600).

21. The client according to one of the preceding claims, wherein the application is executable such kind, in order to provide a contemporary evaluation of user-inputs and an acknowledgement to a user.

22. The client according to one of the preceding claims, wherein the application is executable such kind, in order to enable the user to build an interactive user profile with a menu structure where the user can switch of single elements or content.

23. The client according to one of the preceding claims, wherein the application is executable such kind, in order to support a dynamical swapping or a dynamical reloading.

24. The client according to one of the preceding claims, wherein the application is executable such that it provides a context sensitive dynamical menu structure, where certain menu elements, information or functions arise which are dependent from a context, a state or an event, in which the application is.

25. The client according to one of the preceding claims, wherein the application is executable such kind, that it supports a dynamical personalization, where the user-navigation on the client to the server is transmitted and enables to adapt the client on the basis of the navigation.

26. The client according to one of the claims 2 to 25, wherein a transmission between the first module (530) and the third module (630) is performed by means of a transmission method, that allows a transmission by means of a channel bundling or several simultaneously occupiable channels of different transmission system.

27. The client according to one of the claims 2 to 26, wherein a transmission between the second module (540) and the fourth module (640) is performed by means of a transmission method, that allows a transmission by means of a channel bundling or several simultaneously occupiable channels of different transmission system.

28. The client according to one of the preceding claims, wherein the application can build up and down a connection from client (510) to server (600), which is time controllable.

29. The client according to one of the preceding claims, wherein the connection from client (510) to server (600) is event dependent, requirement dependent or semi permanent.

30. A method of operating a client in a client-server network (500), comprising the steps of:
fixing or determining (840) a server configuration in a server (600);
transmitting (860) of the server configuration to the client (510); and
executing (880) of the server configuration by the client (510) based on the server configuration loaded on the client (510) such that an application is independently executable in the client (510) and a simulation of a server function is performed by the client (510).

31. The method according to claim 30, wherein in at least one of the steps a differential or incremental data shifting (delta update) is performed.

32. The method according to claim 30 or 31, wherein the server configuration itself is executable on the client (510).

33. The method according to one of the claims 30 to 32, wherein the server configuration is carried out as Push or Pull.

34. The method according to one of the claims 30 to 33, wherein the server configuration is carried out as broadcast.

35. The method according to one of the claims 30 to 34, wherein the step of the fixation or determination of the server configuration is carried out based on a profile matrix.

36. The method according to claim 35, wherein the profile matrix determines the degree of self-dependency which with the application is executable on the client.

37. The method according to claim 35 or 36, wherein the parts of the profile matrix are controlled time variant or event-dependent.

38. The method according to one of the claims 30 to 37, wherein the application is executable on the client (510) in order to enable a validation of user-input without a generation of connection costs.

39. The method according to one of the claims 30 to 38, wherein the application is executable in order to provide a contemporary evaluation of user-input and an acknowledgement to a user.

40. The method according to one of the claims 30 to 39, wherein the application is executable in order to enable the user to build an interactive user profile with a menu structure where the user can switch of single elements or contents.

41. The method according to one of the claims 30 to 40, wherein the application is executable in order to support a dynamic swapping or a dynamic reloading.

42. The method according to one of the claims 30 to 41, wherein the application may run such that it provides a context-sensitive dynamic menu structure wherein certain menu elements, information or functions arise, which are dependent from a context, a state or event, in which the application is resting.

43. The method according to one of the claims 30 to 42, wherein the application is such executable that it supports a dynamic personalization wherein the user navigation on the client is transmitted to the server and enables to adapt the client on the basis of the navigation.

44. The method according to one of the claims 30 to 43, wherein the transmission between the second module (540) and the fourth module (640) is performed by a transmission method that allows the transmission with several simultaneously occupiable channels of different transmission systems or allows a transmission by means of channel bundling.

45. The method according to one of the claims 30 to 44, wherein the application builds up and down a connection from client (510) to the server (600) which is time controllable.

46. A client-server system comprising a client according to one of the claims 1 to 29.

47. A computer program for running on a client in a client-server-network, wherein the computer program comprises instructions causing a method according to one of the claims 30 to 45 to be executed.

48. A computer program for running on a server in a client-server-network, wherein the computer program comprises instructions causing a method according to one of the claims 30 to 45 to be executed.

49. The computer program according to claim 47 or 48, comprising instructions or program codes means to execute the method, when the computer program runs on a micro controller, computer or a plurality of computers of a computer network or a plurality of micro controllers of a mobile micro controller network.

50. The computer program according to one of the claims 47 to 49, which is stored on a machine readable data carrier.

51. The computer program according to one of the claims 47 to 49, which is formed as a signal sequence suitable for the transmission over the network.

## Revendications

1. Client, en particulier dans un appareil terminal mobile, dans un réseau client-serveur (500), avec
une unité de mémoire (530, 540) externe à un serveur (600), sachant qu'une configuration de serveur prédéfinie est transmise du serveur (600) au client (510) et est chargée dans le client (510), de telle sorte qu'une application dans le client (510) soit exécutable en autonome et qu'une simulation d'une fonctionnalité de serveur s'effectue par le client.

2. Client selon la revendication 1, qui comporte
une unité d' entrée/sortie (520) comme interface utilisateur pour un utilisateur ;
un premier module (530) avec une unité de mémoire sur laquelle des données sont enregistrées ;
un deuxième module (540) avec une unité de mémoire sur laquelle un programme d'ordinateur est disponible de façon capable de tourner ;
une interconnexion interne (550) avec une interface et une liaison externe (590) avec un trajet de transmission à un serveur (600), sachant que le serveur (600) comporte un troisième module (630) avec une unité de mémoire sur laquelle des données sont enregistrées et un quatrième module (640) avec une unité de mémoire sur laquelle un programme d'ordinateur est disponible de façon capable de tourner, sachant que le premier module (530) dans le client (510) présente une correspondance avec le troisième module (630) dans le serveur (600) et le deuxième module (540) dans le client (510) avec le quatrième module (640) dans le serveur (600), tels que l'application dans le client (510) soit capable de tourner en autonome.

3. Client selon la revendication 2, **caractérisé en ce que** l'application dans le client (510) est capable de tourner en autonome **en ce qu'**une possibilité d'affectation flexible des unités de mémoire des modules concernés est développée.

4. Client selon l'une quelconque des revendications 2 à 3, sur lequel la possibilité d'affectation existe de telle sorte que, du côté des données, le premier module (530) dans le client (510), et du côté du code, le deuxième module (540) dans le client (510), présentent respectivement un couplage élastique pour la distribution des unités de mémoire entre le client et le serveur avec le troisième, module (630) dans le serveur (600) et avec le quatrième module (640) dans le serveur (600).

5. Client selon l'une quelconque des revendications 2 à 4, sur lequel le premier module (530) dans le client (510) forme la correspondance avec le troisième module (630) dans le serveur (600) en ce qu'une zone de mémoire continue est formée.

6. Client selon l'une quelconque des revendications 2 à 5, sur lequel le deuxième module (540) dans le client (510) forme la correspondance avec le quatrième module (640) dans le serveur (600) en ce qu'une zone de mémoire continue est formée.

7. Client selon l'une quelconque des revendications 5 ou 6, sur lequel la zone de mémoire est carrelée.

8. Client selon l'une quelconque des revendications 5 ou 6, sur lequel la zone de mémoire est chevauchante, dupliquée ou reflétée.

9. Client selon l'une quelconque des revendications 5 ou 6, sur lequel la zone de mémoire forme un tampon.

10. Client selon la revendication 9, sur lequel le tampon est exploité par zones comme tampon annulaire.

11. Client selon l'une quelconque des revendications 2 à 10, sur lequel la possibilité d'affectation existe de telle sorte que le premier module (530) dans le client (510) présente un couplage croisé élastique pour la distribution des unités de mémoire entre le client et le serveur avec le quatrième module (640) dans le serveur (600) et que le deuxième module (540) dans le client (510) présente un couplage croisé élastique pour la distribution des unités de mémoire entre le client et le serveur avec le troisième module (630) dans le serveur (600).

12. Client selon la revendication 11, sur lequel les modules (530, 630, 540, 640) concernés par le couplage croisé sont exploités comme tampon annulaire de telle sorte que le flux d'information à travers les modules englobe le mouvement d'un huit.

13. Client selon l'une quelconque des revendications précédentes, sur lequel une matrice de profil est enregistrée dans le serveur, laquelle désigne plus précisément les ressources disponibles sur le client.

14. Client selon la revendication 13, sur lequel la matrice de profil définit le degré d'autonomie avec lequel l'application est capable de tourner dans le client.

15. Client selon la revendication 13 ou 14, sur lequel la matrice de profil influence la possibilité flexible d'affectation des unités de mémoire des modules concernés.

16. Client selon l'une quelconque des revendications 13 à 15, sur lequel la matrice de profil définit le couplage élastique des modules qui se correspondent.

17. Client selon l'une quelconque des revendications 13 à 16, sur lequel la matrice de profil définit le couplage croisé.

18. Client selon l'une quelconque des revendications 13 à 17, sur lequel les parties de la matrice de profil peuvent être commandées de façon variable dans le temps ou en fonction d'événements.

19. Client selon l'une quelconque des revendications précédentes, sur lequel l'application est capable de tourner sur le client de sorte à permettre une validation des entrées de l'utilisateur sans que se produisent des coûts de connexion.

20. Client selon l'une quelconque des revendications précédentes, sur lequel un état dans lequel l'application se trouve est représentable de façon transparente et peut être transmis au serveur (600).

21. Client selon l'une quelconque des revendications précédentes, sur lequel l'application peut tourner de sorte à fournir une évaluation en temps proche des entrées d'un utilisateur et un message en retour à l'utilisateur.

22. Client selon l'une quelconque des revendications précédentes, sur lequel l'application peut tourner de sorte à permettre à l'utilisateur de créer un profil d'utilisateur interactif avec une structure de menu, dans lequel l'utilisateur peut désactiver certains éléments ou certains contenus.

23. Client selon l'une quelconque des revendications précédentes, sur lequel l'application peut tourner de sorte à assister une mémorisation externe dynamique ou un rechargement dynamique.

24. Client selon l'une quelconque des revendications précédentes, sur lequel l'application peut tourner de telle sorte qu'elle fournit une structure de menu dynamique sensible au contexte, dans laquelle surviennent certains éléments de menu, certaines informations ou certaines fonctions qui dépendent du contexte, d'un état ou d'un événement dans lequel l'application se trouve.

25. Client selon l'une quelconque des revendications précédentes, sur lequel l'application peut tourner de telle sorte qu'elle assiste une personnalisation dynamique dans laquelle la navigation de l'utilisateur sur le client est transmise au serveur et permet d'adapter le client sur la base de la navigation.

26. Client selon l'une quelconque des revendications 2 à 25, sur lequel une transmission entre le premier module (530) et le troisième module (630) est effectuée au moyen d'un procédé de transmission qui permet une transmission au moyen de focalisation des canaux ou de plusieurs canaux de différents systèmes de transmission occupables simultanément.

27. Client selon l'une quelconque des revendications 2 à 26, sur lequel une transmission entre le deuxième module (540) et le quatrième module (640) est effectuée au moyen d'un procédé de transmission qui permet une transmission par plusieurs canaux de différents systèmes de transmission occupables simultanément ou une transmission par focalisation des canaux.

28. Client selon l'une quelconque des revendications précédentes, sur lequel l'application peut établir et couper une communication du client (510) au serveur (600), qui peut être commandée par le temps.

29. Client selon l'une quelconque des revendications précédentes, sur lequel la communication du client (510) au serveur (600) est fonction d'un événement, d'une demande ou est semi-permanente.

30. Procédé pour exploiter un client dans un réseau client-serveur (500), avec les étapes suivantes :
définition ou détermination (840) d'une configuration du serveur dans le serveur (600) ;
transmission (860) de la configuration du serveur sur le client (510) ; et
exécution (880) de la configuration du serveur au moyen du client (510) au vu de la configuration du serveur chargée sur le client (510), de telle sorte qu'une application dans le client (510) soit capable de tourner en autonome et qu'une simulation d'une fonctionnalité de serveur s'effectue par le client (510).

31. Procédé selon la revendication 30, dans lequel une translation différentielle ou incrémentielle des données (delta update) est effectuée dans une des étapes.

32. Procédé selon la revendication 30 ou 31, dans lequel la configuration du serveur peut tourner elle-même comme paquet de données sur le client.

33. Procédé selon l'une quelconque des revendications 30 à 32, dans lequel la configuration du serveur s'effectue comme Push ou comme Pull.

34. Procédé selon l'une quelconque des revendications 30 à 33, dans lequel la configuration du serveur s'effectue comme broadcast.

35. Procédé selon l'une quelconque des revendications 30 à 34, dans lequel l'étape de la définition ou de la détermination de la configuration du serveur s'effectue à l'aide d'une matrice de profil.

36. Procédé selon la revendication 35, dans lequel la matrice de profil détermine le degré d'autonomie avec lequel l'application est capable de tourner dans le client.

37. Procédé selon la revendication 35 ou 36, dans lequel les parties de la matrice de profil sont commandées en fonction du temps ou en fonction des événements.

38. Procédé selon l'une quelconque des revendications 30 à 37, dans lequel l'application est capable de tourner sur le client (510) de sorte à permettre une validation des entrées de l'utilisateur sans occasionner de frais de communication.

39. Procédé selon l'une quelconque des revendications 30 à 38, dans lequel l'application est capable de tourner de sorte à mettre à disposition une évaluation en temps proche des entrées d'un utilisateur et un message en retour à l'utilisateur.

40. Procédé selon l'une quelconque des revendications 30 à 39, dans lequel l'application est capable de tourner de sorte à permettre à l'utilisateur d'établir un profil d'utilisateur interactif avec une structure de menu dans laquelle l'utilisateur peut désactiver certains éléments ou contenus.

41. Procédé selon l'une quelconque des revendications 30 à 40, dans lequel l'application est capable de tourner de sorte à assister une mémorisation externe dynamique ou un rechargement dynamique.

42. Procédé selon l'une quelconque des revendications 30 à 41, dans lequel l'application est capable de tourner de telle sorte qu'elle met à disposition une structure de menu dynamique sensible au contexte, dans laquelle apparaissent certains éléments de menu, certaines informations et certaines fonctions qui dépendent du contexte, d'un état ou d'un événement dans lequel l'application se trouve.

43. Procédé selon l'une quelconque des revendications 30 à 42, dans lequel l'application est capable de tourner de telle sorte qu'elle assiste une personnification dynamique lors de laquelle la navigation de l'utilisateur est transmise du client au serveur et permet d'adapter le client sur la base de la navigation.

44. Procédé selon l'une quelconque des revendications 30 à 43, dans lequel une transmission entre un deuxième module (540) et un quatrième module (640) est effectuée au moyen d'un procédé de transmission qui permet une transmission avec plusieurs canaux, occupables en même temps, de systèmes de transmission différents ou qui permet une transmission au moyen d'une focalisation des canaux.

45. Procédé selon l'une quelconque des revendications 30 à 44, dans lequel l'application établit et coupe une communication du client (510) au serveur (600) qui peut être commandée en fonction du temps.

46. Système client-serveur comportant un client selon l'une quelconque des revendications 1 à 29.

47. Programme d'ordinateur pour le déroulement sur un client dans un réseau client-serveur, sachant que le programme d'ordinateur comprend des instructions qui font qu'un procédé selon l'une quelconque des revendications 30 à 45 est exécuté.

48. Programme d'ordinateur pour le déroulement sur un serveur dans un réseau client-serveur, sachant que le programme d'ordinateur comprend des instructions qui font qu'un procédé selon l'une quelconque des revendications 30 à 45 est exécuté.

49. Programme d'ordinateur selon la revendication 47 ou 48, avec des instructions ou des moyens de code de programme pour exécuter le procédé quand le programme d'ordinateur se déroule sur un microcontrôleur, un ordinateur ou sur une pluralité d'ordinateurs d'un réseau d'ordinateurs ou sur une pluralité de microcontrôleurs d'un réseau mobile de microcontrôleurs.

50. Programme d'ordinateur selon l'une quelconque des revendications 47 à 49, qui est enregistré sur un support de données lisible par machine.

51. Programme d'ordinateur selon l'une quelconque des revendications 47 à 50, qui est configuré comme suite de signaux appropriée pour l'expédition via le réseau.
